# EUROPEAN PATENT APPLICATION

(11) **EP 1 820 784 A1**
(43) Date of publication of application: **22.08.2007**
(21) Application number: 07003012.7
(22) Date of filing: 13.02.2007
(51) Int. Cl.: C04B 35/468, H01G 4/12

(54) **Electronic device, dielectric ceramic composition and the production method**

(30) Priority: 14.02.2006 JP 2006037137
(71) Applicant: TDK Corporation, Chuo-ku, Tokyo 103-8272 (JP)
(72) Inventor: Hosono, Masakazu, c/o TDK Corp., Tokyo, 103-8272 (JP); Iguchi, Toshihiro, c/o TDK Corp., Tokyo, 103-8272 (JP); Sakurai, Dan, c/o TDK Corp., Tokyo, 103-8272 (JP); Satoh, Jun, c/o TDK Corp., Tokyo, 103-8272 (JP); Kojima, Mitsuru, c/o TDK Corp., Tokyo, 103-8272 (JP); Kojima, Takashi, c/o TDK Corp., Tokyo, 103-8272 (JP)
(74) Representative: Vossius & Partner

(57) **Abstract**

A dielectric ceramic composition comprising a main component including BaTiO₃, a fourth subcomponent including an oxide of R1 (note that R1 is at least one selected from Y, Ho, Er, Tm, Yb and Lu) and a fifth subcomponent including an oxide of R2 (note that R2 is at least one selected from Dy, Tb, Gd and Eu); wherein a total number of moles of R1 and R2 with respect to 100 moles of the main component is 2 to 6 moles when calculated as a conversion of the R1 and a conversion of the R2, and a ratio of the fifth subcomponent to the total number of moles of R1 and R2 with respect to 100 moles of the main component is in a relationship of 0.5 ≤ R2/(R1 + R2) ≤ 0.75 when calculated as a conversion of the R1 and a conversion of the R2. According to the present invention, high temperature load lifetime and capacity-temperature characteristics can be well balanced even when the dielectric layer of the electronic device is made thin, so that a sufficiently reliable dielectric ceramic composition can be provided.

## Description

The present invention relates to a dielectric ceramic composition and the production method, and particularly relates to a dielectric ceramic composition used for an electronic device having a preferable high temperature load lifetime (accelerated lifetime of insulation resistance), preferable capacity-temperature characteristics and high reliability even when dielectric layers are made thin and a production method thereof.

A multilayer ceramic capacitor as an example of electronic devices is used in a variety of electronic apparatuses. In recent years, demands for electronic apparatuses to be downsized and have higher performance have become increasingly higher, and downsizing, a cost reduction and attaining of a higher capacity have been rapidly made also in the multilayer ceramic capacitor.

Along with that, a thickness of one dielectric layer in the multilayer ceramic capacitor has become thinner, and a dielectric ceramic composition capable of maintaining reliability as a capacitor has been desired even when made to be a thin layer. Particularly, to downsize and attain a higher capacity in an intermediate-withstand voltage capacitor used at a high rated voltage, the dielectric ceramic composition is required to have very high reliability.

On the other hand, as a material for composing internal electrode layers, platinum, palladium and other expensive precious metals have been used in the related art, which has been a factor of an increase of costs of the multilayer ceramic capacitor. To solve the disadvantage, a reduction resistant dielectric ceramic composition capable of using nickel or other inexpensive base metal as its internal electrode layers has been developed. However, a multilayer ceramic capacitor using the reduction resistant dielectric ceramic composition has disadvantages that the high temperature load lifetime (accelerated lifetime of insulation resistance) is short and the reliability is insufficient.

To improve the above disadvantages, the present inventors have disclosed a dielectric ceramic composition including barium titanate as its main component and MgO, MnO, BaO, CaO and SiO₂ as its subcomponents in the Japanese Unexamined Patent Publication No. 6-84692. A multilayer ceramic capacitor including dielectric layers formed by the dielectric ceramic composition strikes a balance between a high temperature load lifetime and capacity-temperature characteristics.

Also, the present inventors have disclosed a multilayer ceramic capacitor having a preferable accelerated lifetime of insulation resistance and capacity-temperature characteristics and suitable for an intermediate-withstand voltage by dividing rare earth elements to two groups based on a value of effective ionic radius for coordination number of 9 and combining the two kinds of rare earth elements.

However, when pursuing a still thinner layer (5µm or so) to realize downsizing and thinner layers, electric field strength (unit: V/µm) imposed on the dielectric layers becomes large as a thickness of one dielectric layer (an interlayer thickness) becomes thinner even when applying a same voltage. Consequently, the insulation resistance is abruptly deteriorated and the high temperature load lifetime becomes short.

In the Japanese Unexamined Patent Publication No. 2003-277139, an interlayer thickness of dielectric layers of a multilayer ceramic capacitor is made to be relatively thick as 11.5µm or 9.5µm in the specific examples. However, in that case, for example, when the interlayer thickness of the dielectric layers is made as thin as 5µm or so, the high temperature load lifetime is deteriorated in some cases and it has been difficult to attain a thinner layer and to stack a larger number of layers.

An object of the present invention is to provide a sufficiently reliable dielectric ceramic composition having a preferable high temperature load lifetime and capable of striking a balance between a high temperature load lifetime and capacity-temperature characteristics even when the dielectric layers are made thin. Another object of the present invention is to provide a production method of the dielectric ceramic composition, and an electronic device having a dielectric layer formed by the dielectric ceramic composition.

The present inventors found that high temperature load lifetime can be improved and good balance can be achieved between high temperature load lifetime and capacity-temperature characteristics by changing the composition of a dielectric ceramic composition, specifically, by dividing rare earth elements to two groups (Y, Ho, Er, Tm, Yb and Lu; and Dy, Tb, Gd and Eu) and setting the total contents of the two groups and ratios thereof to be in predetermined ranges.

According to the present invention, there is provided a dielectric ceramic composition comprising:
a main component including barium titanate;
a first subcomponent including MgO;
a second subcomponent including a SiO₂ based sintering aid;
a third subcomponent including at least one selected from V₂O₅, MoO₃ and WO₃;
a fourth subcomponent including an oxide of R1 (note that R1 is at least one selected from Y, Ho, Er, Tm, Yb and Lu) ;
a fifth subcomponent including an oxide of R2 (note that R2 is at least one selected from Dy, Tb, Gd and Eu); and
a sixth subcomponent including at least one of MnO and Cr₂O₃:
   wherein
   ratios of respective subcomponents with respect to 100 moles of the main component are
   the first subcomponent: 0.8 to 2 moles,
   the second subcomponent: 1.5 to 5 moles,
   the third subcomponent: 0.01 to 0.1 mole,
   the fourth subcomponent: 0.5 to 2 moles (note that the number of moles of the fourth subcomponent is a ratio of R1 alone),
   the fifth subcomponent: 1.5 to 4.5 moles (note that the number of moles of the fifth subcomponent is a ratio of R2 alone), and
   the sixth subcomponent: 0.1 to 0.2 mole;
   the total number of moles of the fourth subcomponent and the fifth subcomponent with respect to 100 moles of the main component is 2 to 6 moles when calculated as a conversion of the R1 and a conversion of the R2; and
   the ratio of the fifth subcomponent to the total number of moles of the fourth subcomponent and the fifth subcomponent with respect to 100 moles of the main component is in a relationship of 0.5 ≤ R2/(R1 + R2) ≤ 0.75 when calculated as a conversion of the R1 and a conversion of the R2.

Note that the above ratios of the fourth subcomponent and the fifth subcomponent are not mole ratios of R1 oxides and R2 oxides, but mole ratios of R1 alone and R2 alone. Namely, for example, when using oxide of Y as the fourth subcomponent, a ratio of the fourth subcomponent being 1 mole means that a ratio of Y is 1 mole, not that a ratio of Y₂O₃ is 1 mole.

An electronic device according to the present invention includes a dielectric layer composed of the above dielectric ceramic composition, and the thickness of one of the dielectric layers is 4µm or thicker and 7µm or thinner (from 4µm to 7µm). The electronic device is not particularly limited and, for example, multilayer ceramic capacitors, piezoelectric elements, chip inductors, chip varistors, chip thermisters, chip resistors and other surface mounted (SMD) chip type electronic devices may be mentioned.

Preferably, an electronic device according to the present invention is used under a condition where electric field strength of 14 V/µm or higher is imposed per one dielectric layer by applying a direct-current voltage. Under the condition, when a rated voltage of a multilayer ceramic capacitor as an example of the electronic device is 100V, an interlayer thickness of the dielectric layers becomes 7µm or thinner.

According to the present invention, there is provided a production method of the above dielectric ceramic composition, comprising the steps of:
obtaining a dielectric ceramic composition powder by mixing a material of the main component and materials of the first to sixth subcomponents; and
obtaining a dielectric ceramic composition by firing the dielectric ceramic composition powder:
   wherein
   a material having an average particle diameter of 0.1 to 0.3µm is used as the material of the main component; and
   firing is performed, so that an average particle diameter of dielectric particles included in the dielectric ceramic composition after firing becomes 1.5 times to 2.0 times as large as an average particle diameter of the material of the main component.

The fourth subcomponent (oxides of R1) exhibits an effect of improving the capacity-temperature characteristics, and the fifth subcomponent (oxides of R2) exhibits an effect of improving an IR lifetime. In the present invention, contents of the fourth subcomponent and the fifth subcomponent with respect to 100 moles of the main component are set to be in specific ranges, and the total number of moles of the both and the ratios of the both are set to be in a predetermined relationship. Namely, the content of the fourth subcomponent with respect to 100 moles of the main component is set to 0.5 to 2 moles (calculated as a conversion of R1), the content of the fifth subcomponent is set to 1.5 to 4.5 moles (calculated as a conversion of R2), the total number of moles of the both (R1 + R2) is set to be 2 to 6 moles, and R2/(R1 + R2) as a ratio of R2 to the total number of moles (R1 + R2) is set to 0.5 to 0.75. Due to that, the high temperature load lifetime can be improved while maintaining the capacity-temperature characteristics.

Furthermore, in the present invention, a fine material is used as the main component material to pursue a thinner dielectric layer. Also, by setting a content of Mg (the first subcomponent) and R1 (the fourth subcomponent) having an effect of suppressing grain growth to be in specific ranges, grain growth of the dielectric particles at firing is controlled and the capacity-temperature characteristics and high temperature load lifetime are improved. Due to that, a thinner dielectric layer and an improvement of the high temperature load lifetime can be realized at the same time while maintaining the capacity-temperature characteristics.

Accordingly, it is possible to obtain a dielectric ceramic composition having sufficient reliability even when the dielectric layers are made thin. Therefore, by using the dielectric ceramic composition of the present invention as the dielectric layers, the dielectric layers can be made thinner, stacking of a large number of dielectric layers can be realized, and an electronic device having a larger capacity can be provided even at the same size while maintaining the reliability. Also, in the case of the same interlayer thickness, a rated voltage can be set higher, so that it is suitable to, for example, an intermediate-withstand voltage multilayer ceramic capacitor.

These and other objects and features of the present invention will become clearer from the following description of the preferred embodiments given with reference to the attached drawing, in which:

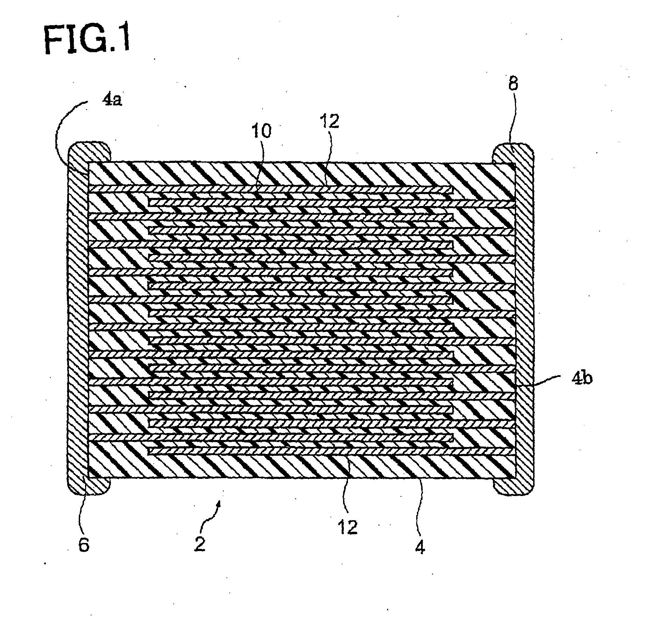

FIG. 1 is a sectional view of a multilayer ceramic capacitor according to an embodiment of the present invention.

### Multilayer Ceramic Capacitor 2

As shown in FIG. 1, a multilayer ceramic capacitor 2 according to an embodiment of the present invention includes a capacity element 4 configured by alternately stacking dielectric layers 10 and internal electrode layers 12. One side of the alternately stacked internal electrode layers 12 is electrically connected to inside of an external electrode 6 formed outside of a first terminal portion 4a of the capacitor element 4. Also, the other side of the alternately stacked internal electrode layers 12 is electrically connected to inside of an external electrode 8 formed outside of a second terminal portion 4b of the capacitor element 4.

The shape of the capacitor element body 4 is not particularly limited and suitably selected in accordance with an object and use thereof, but it is normally a rectangular parallelepiped shape. The size is not limited, either, and suitably selected in accordance with an object and use thereof. It is normally length (0.4 to 5.6 mm) × width (0.2 to 5.0 mm) × height (0.2 to 1.9 mm) or so.

### The dielectric layers 10

The dielectric layers 10 include the dielectric ceramic composition of the present invention.
The dielectric ceramic composition of the present invention comprises
a main component including barium titanate,
a first subcomponent including MgO,
a second subcomponent including a Si0₂ based sintering aid,
a third subcomponent including at least one selected from V₂O₅, MoO₃ and WO₃,
a fourth subcomponent including an oxide of R1 (note that R1 is at least one selected from Y, Ho, Er, Tm, Yb and Lu),
a fifth subcomponent including an oxide of R2 (note that R2 is at least one selected from Dy, Tb, Gd and Eu), and
a sixth subcomponent including at least one of MnO and Cr₂O₃.
The main component includes barium titanate, preferably the main component consists of barium titanate.

Preferable ranges of contents of the above subcomponents and the reasons are as below.
MgO included in the first subcomponent exhibits an effect of flattening a capacity-temperature change rate and an effect of suppressing grain growth. The content of the first subcomponent with respect to 100 moles of the main component is 0.8 to 2 moles, preferably 1 to 1.5 moles. As other first subcomponent than MgO, at least one selected from CaO, BaO and SrO is preferably included. These oxides also exhibit an effect of flattening the capacity-temperature change rate. When a content of the first subcomponent is too small, it is liable that the effect cannot be obtained, while when too large, it is liable that the sinterability declines and the specific permittivity declines.
The first subcomponent includes MgO or includes MgO and at least one of CaO, BaO, SrO, preferably the first subcomponent consists of MgO or consists of MgO and at least one of CaO, BaO, SrO.

The second subcomponent functions as a sintering aid. The content of second subcomponent with respect to 100 moles of the main component is 1.5 to 5 moles, preferably 2 to 3 moles. When the content of the second subcomponent is too small, the capacity-temperature characteristics tend to decline. On the other hand, when the content is too large, the IR lifetime tends to become insufficient. Also, the second subcomponent is preferably (Ba, Ca)ₓ SiO₂₊ₓ (note that x = 0.8 to 1.2) . The "x" in (Ba, Ca)ₓ SiO₂₊ₓ is preferably 0.8 to 1.2, and more preferably 0.9 to 1.1. When the "x" is too small, that is, when the content of SiO₂ is too high, it reacts with barium titanate included in the main component to deteriorate the dielectric characteristics. On the other hand, when the "x" is too large, the melting point of (Ba, Ca)ₓ SiO₂₊ₓ becomes high to deteriorate the sinterability, which is unfavorable. Note that a ratio of Ba and Ca in the second subcomponent may be any, and only one of the two may be
The second subcomponent includes SiO₂ based sintering aid, preferably the second subcomponent consists of SiO₂ based sintering aid.

The third subcomponent exhibits an effect of flattening the capacity-temperature characteristics at a Curie's temperature or higher and an effect of improving the IR lifetime. The content of the third subcomponent with respect to 100 moles of the main component is 0.01 to 0.1 mole, preferably 0.05 to 0.1 mole. When the content of the third subcomponent is too small, the effect becomes insufficient. On the other hand, when the content is too large, the IR tends to decline remarkably. Note that a component ratio of the third subcomponent may be any.
The third subcomponent includes at least one selected from V₂O₅, MoO₃, WO₃, preferably the third component consists of at least one selected from V₂O₅, MoO₃, WO₃.

The fourth subcomponent (oxides of R1) exhibits an effect of flattening the capacity-temperature characteristics. The content of the fourth subcomponent with respect to 100 moles of the main component is 0.5 to 2 moles, preferably 0.5 to 1 mole when calculated as a conversion of R1. When the content of the fourth subcomponent is too small, the effect becomes insufficient and the capacity-temperature characteristics decline. On the other hand, when the content is too large, the sinterability tends to decline. The oxides of R1 are preferably oxides of Y, Ho and Er and, more preferably, an oxide of Y.
The fourth subcomponent includes oxide of R1, preferably the fourth subcomponent consists of oxide of R1.

The fifth subcomponent (oxides of R2) exhibits an effect of improving the insulation resistance (IR) and an IR lifetime. The content of the fifth subcomponent with respect to 100 moles of the main component is 1.5 to 4.5 moles, preferably 1.5 to 3 moles when calculated as a conversion of R2. Note that when the content of the fifth subcomponent is too large, the capacity-temperature characteristics tend to decline. The oxides of R2 are preferably oxides of Tb, Gd and Eu and, more preferably, an oxide of Tb.
The fifth subcomponent includes oxide of R2, preferably the fifth subcomponent consists of oxide of R2.

In the present embodiment, a total number of moles of the fourth subcomponent and the fifth subcomponent with respect to 100 moles of the main component, that is, a total number of moles of R1 and R2 with respect to 100 moles of the main component is 2 to 6 moles, preferably 3 to 5 moles. When the total number of moles of R1 and R2 is too small, the high temperature load lifetime tends to decline, while when too large, the capacity-temperature characteristics tend to decline.

Furthermore, the total number of moles of R1 and R2 is in the above range, and a ratio of R2 to the total number of moles of R1 and R2 with respect to 100 moles of the main component, that is, R2/(R1 + R2) is 0.5 or higher and 0.75 or lower. When R2/(R1 + R2) is too low, the high temperature load lifetime tends to decline, while when too high, the capacity-temperature characteristics tend to decline.

The sixth subcomponent exhibits an effect of accelerating sintering, an effect of heightening the IR and an effect of improving the IR lifetime. The content of the sixth subcomponent with respect to 100 moles of the main component is 0.1 to 0.2 mole. Note that when the content of the sixth subcomponent is too large, the capacity-temperature characteristics tend to decline. The component ratio of the sixth subcomponent may be any.
The sixth subcomponent includes at least one of MnO and Cr₂O₃, preferably the sixth subcomponent consists of at least one selected from MnO and Cr₂O₃.

Note that, in the present specification, respective oxides composing the main component and respective subcomponents are expressed by a stoichiometric composition, however, an oxidized state of the respective oxides may deviate from the stoichiometric composition. Note that the above ratios of the subcomponents are obtained by calculating as oxides of the above stoichiometric composition based on a metal amount included in oxides composing each of the subcomponents.

In the present embodiment, the dielectric layer 10 is composed of the above dielectric ceramic composition, and an average particle diameter of the dielectric particles included in the dielectric ceramic composition is 0.2 to 0.5µm, preferably 0.25 to 0.4µm. When the average particle diameter is too small, the capacity-temperature characteristics tend to decline, while when too large, the high temperature load lifetime tends to decline. The average particle diameter of the dielectric particles can be measured, for example, by a code method of measuring an average particle diameter by assuming that shapes of the dielectric particles are spherical based on an image of the dielectric particle by a scanning electron microscope (SEM) .

A thickness of one dielectric layer 10 is normally 40µm or thinner, and particularly 10µm or thinner. However, in the present embodiment, 7µm or thinner is preferable, and 5µm or thinner is more preferable. A lower limit of the thickness is 4µm or so in the present embodiment. Note that the number of dielectric layers 10 to be stacked is normally 2 to 1000 or so.

### Internal Electrode Layer 12

A conductive material included in the internal electrode layers 12 is not particularly limited and base metals may be used because components of the dielectric layers 10 has resistance to reduction. As base metals to be used as the conductive material, Ni or a Ni alloy is preferable. As a Ni alloy, an alloy of at least one kind of element selected from Mn, Cr, Co and Al with Ni is preferable, and a Ni content in the alloy is preferably 95 wt% or larger. Note that Ni or a Ni alloy may include P or other variety of trace components in an amount of not exceeding 0.1 wt% or so. A thickness of one internal electrode layer 12 may be suitably determined and is normally 0.5 to 5µm and particularly preferably 0.5 to 2.5µm.

### External Electrodes 6 and 8

A conductive material to be included in the external electrodes 6 and 8 is not particularly limited and inexpensive Ni, Cu and alloys of these may be used in the present invention. Also, a thickness of each of the external electrodes 6 and 8 may be suitably determined in accordance with the use object, etc., but normally 10 to 50µm or so is preferable.

### Production Method of Multilayer Ceramic Capacitor 2

A multilayer ceramic capacitor 2 using the dielectric ceramic composition of the present invention is produced by forming a green chip by a normal printing method or sheet method using paste, firing the same, then, printing or transferring external electrodes thereon and firing in the same way as in multilayer ceramic capacitors of the related art. Below, the production method will be explained specifically.

First, dielectric ceramic composition powder included in dielectric layer paste is prepared. The dielectric ceramic composition powder is obtained by mixing materials of the main component and materials of the subcomponents and drying.

The materials of the main component (barium titanate) may be obtained by the so-called liquid-phase method besides the so-called solid-phase method. The solid-phase method (calcining method) is, in the case of using BaCO₃ and TiO₂ as starting materials, a method of obtaining materials by weighing them to be predetermined amounts, mixing, calcining and pulverizing. As the liquid-phase methods, an oxalate method, a hydrothermal synthesis method, an alkoxide method, and a sol-gel method, etc. may be mentioned.

In the present embodiment, as the materials of the main component, a fine powder having an average particle diameter of 0.1 to 0.3µm, preferably 0.15 to 0.25µm is used. By using a fine powder, the dielectric layer can be made thinner. Also, by controlling grain growth of the dielectric particles, sufficient reliability can be obtained. An average particle diameter of the materials of the main component can be measured as an average value of diameters of 100 to 200 of material powders, for example, when observing the materials of the main component by a scanning electron microscope (SEM).

As materials of the subcomponents, the oxides mentioned above, mixtures of them, and composite oxides may be used, alternately, it may be suitably selected from a variety of compounds to be the above oxides, mixtures thereof, and composite oxides by firing, such as carbonate, oxalate, nitrate, hydroxide and organic metal compound, etc., and mixed for use. Contents of respective subcomponents in the dielectric ceramic composition powder may be determined so as to attain a composition of the respective subcomponents in the above dielectric ceramic composition after firing.

Next, the obtained dielectric ceramic composition powder is made to be slurry to fabricate dielectric layer paste.

The dielectric layer paste may be organic based slurry obtained by kneading a dielectric ceramic composition powder and an organic vehicle or water-based slurry.

An organic vehicle is obtained by dissolving a binder in an organic solvent. The binder to be used for the organic vehicle is not particularly limited and may be suitably selected from a variety of normal binders, such as ethyl cellulose and polyvinyl butyral. Also, the organic solvent to be used is not particularly limited and may be suitably selected from a variety of organic solvents, such as terpineol, butyl carbitol, acetone and toluene, in accordance with a method to be used, such as the printing method and sheet method.

When using water based slurry as dielectric layer paste, a water based vehicle obtained by dissolving a water-soluble binder and dispersant, etc. in water is kneaded with a dielectric material. The water-soluble binder used for the water based vehicle is not particularly limited and, for example, polyvinyl alcohol, cellulose and a water-soluble acrylic resin, etc. may be used.

The internal electrode layer paste is fabricated by kneading a conductive material formed by the above variety of conductive metals and alloys or a variety of oxides, organic metal compounds, and resinates, etc., which become the above conductive material after firing, with the above organic vehicle.

External electrode paste may be fabricated in the same way as the internal electrode layer paste explained above.

A content of the organic vehicle in each of the paste is not particularly limited and may be a normal content of, for example, about 1 to 5 wt% of the binder and about 10 to 50 wt% of the solvent. Also, each paste may include additives selected from a variety of dispersants, plasticizers, dielectrics and insulators, etc. in accordance with need. A total content of them is preferably not larger than 10 wt%.

When using a printing method, the dielectric layer paste and the internal electrode layer paste are printed by stacking on a substrate, such as PET, cut into a predetermined shape and detached from the substrate so as to obtain a green chip.

While when using a sheet method, the dielectric layer paste is used for forming a green sheet, the internal electrode layer paste is printed thereon, and the results are stacked to obtain a green chip.

Before firing, binder removal processing is performed on the green chip. The binder removal processing may be suitably determined in accordance with the kind of conductive material in the internal electrode layer paste, and when using Ni, a Ni alloy or other base metal as the conductive material, the oxygen partial pressure in the binder removal atmosphere is preferably 10⁻⁴⁵ to 10⁵ Pa. When the oxygen partial pressure is lower than the above range, the effect of binder removal declines; while when exceeds the above range, the internal electrode layer tends to be oxidized.

Also, as other condition at the binder removal processing, the temperature raising rate is preferably 5 to 300°C/hour and more preferably 10 to 100°C/hour, the holding temperature is preferably 180 to 400°C and more preferably 200 to 350°C, and the temperature holding time is preferably 0.5 to 24 hours and more preferably 2 to 20 hours. Also, the firing atmosphere is preferably in the air or a reducing atmosphere, and a preferable atmosphere gas in the reducing atmosphere is, for example, a wet mixed gas of N₂ and H₂.

A firing condition is not particularly limited as far as an average particle diameter of the dielectric particles included in the dielectric ceramic composition becomes 1.5 times to 2.0 times as large as an average particle diameter of materials of the main component. However, for example, the condition below may be mentioned.

An atmosphere at firing is preferably a reducing atmosphere, but may be suitably determined in accordance with a kind of a conductive material in the internal electrode layer paste. When using Ni, a Ni alloy and other base metal as the conductive material, the oxygen partial pressure in the firing atmosphere is preferably 10⁻⁸ to 10⁻⁴ Pa. When the oxygen partial pressure is lower than the above range, a conductive material in the internal electrode layer is abnormally sintered to be broken in some cases. While, when the oxygen partial pressure exceeds the above range, the internal electrode layer tends to be oxidized. As the atmosphere gas, for example, wet mixed gas of N₂ and H₂ may be preferably used.

A holding temperature at firing is preferably 1150 to 1300°C, and more preferably 1200 to 1260°C. When the holding temperature is lower than the above range, densification becomes insufficient, while when exceeding the above range, breakings of electrodes due to abnormal sintering of the internal electrode layer, deterioration of capacity-temperature characteristics due to dispersion of the internal electrode layer components, and a reduction of the dielectric ceramic composition are easily caused.

As other firing conditions, the temperature raising rate is preferably 50 to 500°C/hour and more preferably 200 to 300°C/hour, the temperature holding time is preferably 0.5 to 8 hours and more preferably 1 to 3 hours, and the cooling rate is preferably 50 to 500°C/hour and more preferably 200 to 300°C/hour.

When firing in a reducing atmosphere, it is preferable that annealing is performed on the capacitor element body. Annealing is processing for re-oxidizing the dielectric layer and the IR lifetime is remarkably elongated thereby, so that the reliability is improved.

An oxygen partial pressure in the annealing atmosphere is preferably 10⁻³ Pa or higher, and particularly preferably 10⁻² to 10 Pa. When the oxygen partial pressure is lower than the above range, re-oxidization of the dielectric layer becomes difficult, while when too exceeding the above range, the internal electrode layer tends to be oxidized.

The holding temperature at annealing is preferably 1100°C or lower, and particularly preferably 500 to 1100°C. When the holding temperature is lower than the above range, oxidization of the dielectric layer becomes insufficient, so that the IR becomes low and the IR lifetime becomes short easily. On the other hand, when the holding temperature exceeds the above range, not only the internal electrode layer is oxidized to reduce the capacity, but the internal electrode layer reacts with the dielectric base material, and deterioration of the capacity-temperature characteristics, a decline of the IR and a decline of the IR lifetime are easily caused. Note that the annealing may be composed only of a temperature raising step and a temperature lowering step. Namely, the temperature holding time may be zero. In this case, the holding temperature is a synonym of the highest temperature.

As other annealing conditions, the temperature holding time is preferably 0 to 20 hours and more preferably 2 to 10 hours, and the cooling rate is preferably 50 to 500°C/hour and more preferably 100 to 300°C/hour. Also, a preferable atmosphere gas of annealing is, for example, a wet N₂ gas, etc.

In the above binder removal processing, firing and annealing, for example, a wetter, etc. may be used to wet the N₂ gas and mixed gas, etc. In this case, the water temperature is preferably 5 to 75°C or so.

The binder removal processing, firing and annealing may be performed continuously or separately.

End surface polishing, for example, by barrel polishing or sand blast, etc. is performed on the capacitor element body 4 obtained as above, and the external electrode paste is printed or transferred thereon and fired to form external electrodes 6 and 8. A firing condition of the external electrode paste is preferably, for example, in a wet mixed gas of N₂ and H₂ at 600 to 800°C for 10 minutes to 1 hour or so. A cover layer is formed by plating, etc. on the surfaces of the external electrodes 6 and 8 if necessary.

A multilayer ceramic capacitor of the present invention produced as above is mounted on a print substrate, etc. by soldering, etc. and used for a variety of electronic apparatuses, etc. Since it is used under a condition where electric field strength imposed on one dielectric layer is 14V/µm or higher, it is suitable when downsizing the capacitor and attaining a larger capacity, particularly, in the case of attaining a thinner layer (for example, 5µm or thinner) in an intermediate-withstand voltage multilayer ceramic capacitor having a rated voltage of 100V or higher.

An embodiment of the present invention was explained above, however, the present invention is not limited to the embodiment and may be variously modified within the scope of the present invention.

For example, in the above embodiment, a multilayer ceramic capacitor was explained as an example of electronic devices, but electronic devices according to the present invention are not limited to the multilayer ceramic capacitor and may be any as far as including a dielectric layer formed by the dielectric ceramic composition explained above.

### EXAMPLES

Below, the present invention will be explained based on further detailed examples, but the present invention is not limited to the examples.

### Example 1

First, a main component material and subcomponent materials were prepared. As the main component material, BaTiO₃ having an average particle diameter of 0.2µm was used. As the subcomponent materials, MgCO₃ (the first subcomponent), (Ba_{0.6} Ca_{0.4})SiO₃ (the second subcomponent), V₂O₅ (the third subcomponent), Y₂O₃ (the fourth subcomponent), Tb₄O₇ (the fifth subcomponent) and MnCO₃ (the sixth subcomponent) were used. Note that MgCO₃ and MnCO₃ become oxides by firing and are included as MgO and MnO in the dielectric ceramic composition, respectively. (Ba_{0.6}Ca_{0.4})SiO₃ (hereinafter, also referred to as BCG) was produced by the method explained below.

The BCG was produced by wet mixing BaCO₃, CaCO₃ and SiO₂ by a ball mill for 16 hours, drying, then, firing at 1150°C in the air and, furthermore, wet grinding by a ball mill for 100 hours.

Next, the materials were weighed, so that a composition of the subcomponents to be added with respect to 100 moles of BaTiO₃ satisfy a composition shown in Table 1. Quantities weighed here become the final adding quantities of the respective subcomponent materials.

The materials of the main component and the subcomponents were mixed by a ball mill and dried, so that a dielectric ceramic composition powder was obtained.

The thus obtained dielectric ceramic composition powder in an amount of 100 parts by weight, an acrylic resin in an amount of 4.8 parts by weight, methylene chloride in an amount of 40 parts by weight, ethyl acetate in an amount of 20 parts by weight, mineral spirit in an amount of 6 parts by weight and acetone in an amount of 4 parts by weight were mixed by a ball mill to form paste, so that dielectric layer paste was obtained.

Ni particles having an average particle diameter of 0.1 to 0.3µm in an amount of 100 parts by weight, an organic vehicle (obtained by dissolving ethyl cellulose in an amount of 8 parts by weight in butyl carbitol in an amount of 92 parts by weight) in an amount of 40 parts by weight and butyl carbitol in an amount of 10 parts by weight were kneaded by a triple-roll to form paste, so that internal electrode layer paste was obtained.

The obtained dielectric layer paste was used to form a green sheet having a thickness of 5.5µm on a PET film. After printing the internal electrode layer paste thereon, the sheet was removed from the PET film. Next, the thus obtained green sheets and protective green sheets (the internal electrode layer paste was not printed thereon) were stacked, pressed to bond, so that a green multilayer body was obtained.

' Next, the green multilayer body was cut into a predetermined size to form a green chip and subjected to binder removal processing, firing and annealing under the conditions explained below, so that a multilayer ceramic fired body was obtained.

### Binder Removal Processing

| | |
|---|---|
| Temperature raising rate: | 25°C/hour |
| Holding temperature: | 260°C |
| Temperature holding time: | 8 hours |
| Atmosphere: | in the air |

### Firing

| | |
|---|---|
| Temperature raising rate: | 200°C/hour |
| Holding temperature: | 1200 to 1260°C |
| Temperature holding time: | 2 hours |
| Cooling rate: | 200°C/hour |
| Atmosphere: | wet mixed gas of N₂ + H₂ |
| Oxygen partial pressure: | 10⁻⁷ Pa |

### Annealing

| | |
|---|---|
| Temperature raising rate: | 200°C/hour |
| Holding temperature: | 1050°C |
| Temperature holding time: | 2 hours |
| Cooling rate: | 200°C/hour |
| Atmosphere: | wet N₂ gas |
| Oxygen partial pressure: | 1 Pa |

Note that a wetter with a water temperature of 20°C was used to wet the atmosphere gases in firing and annealing.

Next, both end surfaces of the obtained multilayer ceramic fired body was polished by sand blast, In-Ga was applied as external electrodes, so that a multilayer ceramic capacitor sample shown in FIG. 1 was obtained.

A size of the obtained capacitor samples was 3.2 mm × 1.6 mm × 0.6 mm, the number of dielectric layers sandwiched by internal electrode layers was 4, a thickness (an interlayer thickness) of one dielectric layer was 4.5µm, and a thickness of one internal electrode layer was 1.0µm.

On the obtained capacitor samples, an average particle diameter of the dielectric particles, specific permittivity "εᵣ", a dielectric loss tanδ, a CR product, a high temperature load lifetime and the X7R characteristics were evaluated by the methods explained below.

### Average Particle Diameter of Dielectric Particles

In a method of measuring an average particle diameter of the dielectric particles, the obtained capacitor sample was cut on a perpendicular surface to the internal electrodes first and the cut surface was polished. Then, after performing chemical etching on the polished surface, observation was made by a scanning electron microscope (SEM), and calculation of average particle diameter based on the code method was made on an assumption that a shape of each dielectric particle was sphere. The calculated value was compared with an average particle diameter of the main component material, and it was examined that the average particle diameter of the dielectric particles was how many times as large as an average particle diameter of the main component material. The results are shown in Table 1.

### Specific Permittivity εᵣ

On the capacitor samples, capacitance C was measured by a digital LCR meter (YHP4274A made by Yokogawa Electric Corporation) under a condition of the reference temperature of 20°C, a frequency of 1 kHz and an input signal level (measurement voltage) of 0.25 Vrms/µm. A specific permittivity (no unit) was calculated from the obtained capacitance, a dielectric thickness of the multilayer ceramic capacitor and a superimposed area of internal electrodes. Specific permittivity of 1800 or higher was considered preferable. The results are shown in Table 1.

### Dielectric Loss tanδ

On each capacitor sample, a dielectric loss tanδ was measured by using a digital LCR meter (YHP4274A made by Yokogawa Electric Corporation) under a condition of the reference temperature of 20°C, a frequency of 1 kHz and an input signal level (measurement voltage) of 0.25 Vrms/µm. The smaller the dielectric loss is, the more preferable. The results are shown in Table 1.

### CR Product

First, on each capacitor sample, insulation resistance IR was measured after applying a direct-current voltage of 4 V/µm at 20°C for 1 minute by using an insulation resistance tester (R8340A made by Advantest Corporation) . A CR product was measured by obtaining a product of capacitance C (unit:
µF) measured as explained above and insulation resistance IR (unit: MΩ). A CR product of 500 or higher was considered preferable. The results are shown in Table 1.

### High Temperature Load Lifetime (Accelerated Lifetime of Insulation Resistance / HALT)

A high temperature load lifetime (an accelerated lifetime of insulation resistance / HALT) was evaluated by holding the obtained samples in a state of being applied with a direct current voltage of 50 V/µm at 200°C and measuring an average lifetime. In the present embodiment, time (unit: hour) until the insulation resistance (IR) became 2 × 10⁵Ω or lower was considered as a lifetime. The test of the high temperature load lifetime was conducted on 10 capacitor samples. A high temperature load lifetime of 3 hours or longer was considered preferable. The results are shown in Table 1.

### X7R Characteristics

As to the X7R characteristics, on each capacitor sample, capacitance was measured by using a digital LCR meter (YHP4274A made by Yokogawa Electric Corporation) under a condition of the reference temperature of 25°C, a frequency of 1 kHz and an input signal level (measurement voltage) of 0.25 Vrms, and samples, wherein a capacitance change rate (ΔC/C) with respect to temperatures satisfies the X7R characteristics (within ±15%) of the EIAJ standard in a temperature range of -55 to 125°C, were considered preferable. Change rates of capacitance at -55°C and 125°C are shown in Table 1, respectively.

Table 1

**Table 1**

| Sample No. | Subcomponent Composition | | | | | | | | **(Average Particle Diameter of Dielectric Particle) / (Average Particle Diameter of Main Component Material) | Electric Characteristics | | | | | |
|---|---|---|---|---|---|---|---|---|---|---|---|---|---|---|---|
| | Fourth | Fifth | Total Number of Moles of Fourth and Fifth | Mole Ratio | First | Second | Third | Sixth | | Specific Permittivity **ε**ᵣ | Dielectric Loss tan δ | X7R Characteristics 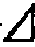 C/C[%] | | High Temperature Load Lifetime [h] | CR Product [µF·MΩ] |
| | Calculated as Conversion of R1 | Calculated as Conversion of R2 | | | | | | | | | | | | | |
| | Y [mol] | Tb [mol] | Y+Tb [mol] | Tb/(Y+Tb) | MgO Tb/(Y+Tb) | BCG [mol] | V₂O₅ [mol] | MnO [mol] | | | | -55°C | 125°C | | |
| *1 | 0.2 | 0.6 | 0.8 | 0.75 | 1.2 | 2.5 | 0.10 | 0.15 | 1.7 | 2341 | 3.88 | -10.8 | -12.8 | *2.3* | 1915 |
| 2 | 0.5 | 1.5 | 2.0 | 0.75 | 12 | 2.5 | 0.10 | 0.15 | 1.7 | 2295 | 2.77 | -11.1 | -13.0 | 5.9 | 1963 |
| 3 | 1.5 | 4.5 | 6.0 | 0.75 | 1.2 | 2.5 | 0.10 | 0.15 | 1.7 | 1934 | 2.09 | -11.4 | -14.7 | 9.6 | 2182 |
| *4 | 2.5 | 7.5 | 10.0 | 0.75 | 1.2 | 2.5 | 0.10 | 0.15 | 1.6 | 1819 | 2.02 | -12.1 | *-18.1* | 12.1 | 2252 |
| *5 | 2.4 | 1.8 | 4.0 | 0.40 | 1.2 | 2.5 | 0.10 | 0.15 | 1.9 | 1923 | 1.55 | -5.1 | -7.9 | *1.6* | *118* |
| 6 | 2.0 | 2.0 | 4.0 | 0.50 | 1.2 | 2.5 | 0.10 | 0.15 | 1.9 | 2002 | 1.67 | -4.1 | -7.5 | 3.3 | 506 |
| 7 | 1.4 | 2.6 | 4.0 | 0.65 | 1.2 | 2.5 | 0.10 | 0.15 | 1.7 | 2118 | 1.87 | -8.0 | -11.2 | 5.9 | 1166 |
| 8 | 1.0 | 3.0 | 4.0 | 0.75 | 1.2 | 2.5 | 0.10 | 0.15 | 1.6 | 2249 | 2.05 | -11.9 | -13.3 | 7.7 | 1963 |
| *9 | 0.4 | 3.6 | 4.0 | 0.90 | 1.2 | 2.5 | 0.10 | 0.15 | 1.5 | 2264 | 2.38 | *-15.1* | -*16.9* | 9.8 | 2273 |

| | | | | | | | | | | | | | | | |
|---|---|---|---|---|---|---|---|---|---|---|---|---|---|---|---|
| Average particle diameter of main component material 0.2µm Samples with "*" mark indicate comparative examples of the present invention. "**" mark indicates an average particle diameter of dielectric particles when assuming that an average particle diameter of the main component material is 1. | | | | | | | | | | | | | | | |

From Table 1, when changing a total number of moles of Y and Tb (samples 1 to 4), samples (samples 2 and 3), wherein a total number of moles of Y and Tb is in a range of the present invention, it was confirmed that the X7R characteristics and a high temperature load lifetime were well balanced while maintaining the specific permittivity, dielectric loss and CR product. On the other hand, in the sample 1, wherein the total number of moles of Y and Tb is smaller than the range of the present invention, the high temperature load lifetime was deteriorated. In the sample 4, wherein the total number of moles of Y and Tb is larger than the range of the present invention, it was confirmed that the specific permittivity declined and the X7R characteristics were not satisfied.

When changing a ratio of Tb to the total number of moles of Y and Tb, that is, Tb/ (Y + Tb) (samples 5 to 9), it was confirmed that the samples (samples 6 to 8), wherein Tb/(Y + Tb) is in a range of the present invention, exhibited a well balance between the X7R characteristics and a high temperature load lifetime while maintaining the specific permittivity, dielectric loss and CR product. On the other hand, in the sample 5, wherein Tb/(Y + Tb) was smaller than the range of the present invention, it was confirmed that the high temperature load lifetime and CR product deteriorated. Also, in the sample 9, wherein Tb/(Y + Tb) was larger than the range of the present invention, it was confirmed that the X7R characteristics were not satisfied.

### Example 2

Other than changing the composition of the subcomponents to that shown in Table 2, capacitor samples were produced in the same way as in the example 1 and characteristics were evaluated in the same way as in the example 1. The results are shown in Table 2.

Table 2

**Table 2**

| Sample No. | Subcomponent Composition | | | | | | | | **(Average Particle Diameter of Dielectric Particle) (Average / Particle Diameter of Main Component Material) | Electric Characteristics | | | | | |
|---|---|---|---|---|---|---|---|---|---|---|---|---|---|---|---|
| | Fourth | Fifth | Total Number of Moles of Fourth and Fifth | Mole Ratio | First | Second | Third | Sixth | | Specific Permittivity εᵣ | Dielectric Loss tan δ | X7R Characteristics | | High Temperature Load Lifetime | CR Product [µF-MΩ] |
| | Calculated as Conversion of R1 | Calculated as Conversion of R2 | | | | | | | | | | 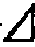 C/C[%] [h] | | | |
| | Y [mol] | Tb [mol] | Y+Tb [mol] | Tb/(Y+Tb) | MgO [mol] | BCG [mol] | V₂O₅ [mol] | MnO [mol] | | | | -55°C | 125°C | | |
| *10 | 1.0 | 3.0 | 4.0 | 0.75 | 0.5 | 2.5 | 0.10 | 0.15 | 2.0 | 2732 | 3.88 | -11.0 | *-18.8* | 10.0 | 6650 |
| 11 | 1.0 | 3.0 | 4.0 | 0.75 | 0.8 | 2.5 | 0.10 | 0.15 | 1.7 | 2207 | 3.26 | -3.4 | -14.8 | 9.1 | 3107 |
| 8 | 1.0 | 3.0 | 4.0 | 0.75 | 1.2 | 2.5 | 0.1 | 0.15 | 1.6 | 2249 | 2.05 | -11.9 | -13.3 | 7.7 | 1963 |
| 12 | 1.0 | 3.0 | 4.0 | 0.75 | 2.0 | 2.5 | 0.10 | 0.15 | 1.6 | 1802 | 2.03 | -0.9 | -9.8 | 3.4 | 1694 |
| *13 | 1.0 | 3.0 | 4.0 | 0.75 | 3.0 | 2.5 | 0.10 | 0.15 | 1.5 | *1531* | 2.17 | -0.8 | -10.0 | 2.3 | 1088 |
| *14 | 1.0 | 3.0 | 4.0 | 0.75 | 1.2 | 2.5 | 0.10 | 0.05 | 1.6 | 2380 | 2.31 | *-15.8* | -9.9 | 4.6 | *121* |
| 15 | 1.0 | 3.0 | 4.0 | 0.75 | 1.2 | 2.5 | 0.10 | 0.10 | 1.6 | 2328 | 2.14 | -14.8 | -11.4 | 6.8 | 1513 |
| 8 | 1.0 | 3.0 | 4.0 | 0.75 | 1.2 | 2.5 | 0.10 | 0.15 | 1.6 | 2249 | 2.05 | -11.9 | -13.3 | 7.7 | 1963 |
| 16 | 1.0 | 3.0 | 4.0 | 0.75 | 1.2 | 2.5. | 0.10 | 0.20 | 1.6 | 2227 | 2.11 | -14.2 | -12.9 | 7.1 | 2021 |
| *17 | 1.0 | 3.0 | 4.0 | 0.75 | 1.2 | 2.5 | 0.10 | 0.25 | 1.5 | 2206 | 2.00 | -14.3 | *-15.4* | 7.3 | 2489 |
| *18 | 1.0 | 3.0 | 4.0 | 0.75 | 1.2 | 2.5 | 0.00 | 0.15 | 1.6 | 2448 | 2.58 | -10.1 | *-15.4* | *2.1* | 2362 |
| 19 | 1.0 | 3.0 | 4.0 | 0.75 | 1.2 | 2.5 | 0.01 | 0.15 | 1.6 | 2324 | 2.44 | -11.3 | -14.7 | 3.1 | 3363 |
| 20 | 1.0 | 3.0 | 4.0 | 0.75 | 1.2 | 2.5 | 0.05 | 0.15 | 1.7 | 2401 | 2.39 | -11.6 | -13.9 | 5.3 | 3297 |
| 8 | 1.0 | 3.0 | 4.0 | 0.75 | 1.2 | 2.5 | 0.10 | 0.15 | 1.6 | 2249 | 2.05 | -11.9 | -13.3 | 7.7 | 1963 |
| *21 | 1.0 | 3.0 | 4.0 | 0.75 | 1.2 | 2.5 | 0.20 | 0.15 | 2.0 | 2079 | 2.15 | -11.9 | -11.3 | *0.2* | *17* |
| *22 | 1.0 | 3.0 | 4.0 | 0.75 | 1.2 | 1.0 | 0.10 | 0.15 | 1.6 | 2435 | 2.39 | *-16.6* | -*17*.*9* | 11.4 | 2009 |
| 23 | 1.0 | 3.0 | 4.0 | 0.75 | 1.2 | 1.5 | 0.10 | 0.15 | 1.6 | 2242 | 2.02 | -14.7 | -15.0 | 9.5 | 1875 |
| 8 | 1.0 | 3.0 | 4.0 | 0.75 | 1.2 | 2.5 | 0.10 | 0.15 | 1.6 | 2249 | 2.05 | -11.9 | -13.3 | 7.7 | 1963 |
| 24 | 1.0 | 3.D | 4.0 | 0.75 | 1.2 | 5.0 | 0.10 | 0.15 | 1.6 | 2459 | 2.11 | -10.0 | -11.9 | 4.1 | 1772 |
| *25 | 1.0 | 3.0 | 4.0 | 0.75 | 1.2 | 10.0 | 0.10 | 0.15 | 1.7 | 2638 | 2.76 | -5.5 | -9.3 | *0.9* | 1593 |

| | | | | | | | | | | | | | | | |
|---|---|---|---|---|---|---|---|---|---|---|---|---|---|---|---|
| Average particle diameter of main component material: 0.2µm Samples with "*" mark indicate comparative examples of the present invention. "**" mark indicates an average particle diameter of dielectric particles when assuming that an average particle diameter of the main component material is 1. | | | | | | | | | | | | | | | |

From Table 2, when changing adding quantities of the first to third subcomponents and the sixth subcomponent, it was confirmed that samples, wherein adding quantities of the first to third subcomponents and the sixth subcomponent are in the range of the present invention, exhibited a well balance between the X7R characteristics and high temperature load lifetime while maintaining the specific permittivity, dielectric loss and CR product. On the other hand, in samples, wherein adding quantities of the first to third subcomponents and the sixth subcomponent are out of the range of the present invention, it was confirmed that the X7R characteristics or the high temperature load lifetime were deteriorated.

Also, from Table 1 and Table 2, it was confirmed that an average particle diameter of the dielectric particles was in a range of 1.5 times to 2.0 times as large as that of the main component material in all samples.

From the above results, according to the present invention, it was confirmed that the high temperature load lifetime and the capacitance-temperature characteristics could be well balanced while maintaining the specific permittivity and CR product even when a dielectric layer of a multilayer ceramic capacitor was made thin (4.5µm). Accordingly, a more compact capacitor with a larger capacity can be realized. Particularly, even when a dielectric layer of an intermediate-withstand voltage multilayer ceramic capacitor is made thinner, sufficient reliability can be secured.

Also, since a finer material than that in the example in the Japanese Unexamined Patent Publication No. 2003-277139 is used as the main component material, firing can be performed at a lower temperature (1200 to 1260°C) than the firing temperature (1280°C) of the example in the Japanese Unexamined Patent Publication No. 2003-277139. As a result, deterioration of the capacity-temperature characteristics, etc. due to breaking of internal electrodes and dispersion of the internal electrode layer components can be suppressed, which leads to a reduction of firing costs.

## Claims

1. A dielectric ceramic composition comprising:
a main component including barium titanate;
a first subcomponent including MgO;
a second subcomponent including a SiO₂ based sintering aid;
a third subcomponent including at least one selected from V₂O₅, MoO₃ and WO₃;
a fourth subcomponent including an oxide of R1 (note that R1 is at least one selected from Y, Ho, Er, Tm, Yb and Lu);
a fifth subcomponent including an oxide of R2 (note that R2 is at least one selected from Dy, Tb, Gd and Eu); and
a sixth subcomponent including at least one of MnO and Cr₂O₃:
wherein
ratios of respective subcomponents with respect to 100 moles of said main component are
the first subcomponent: 0.8 to 2 moles,
the second subcomponent: 1.5 to 5 moles,
the third subcomponent: 0.01 to 0.1 mole,
the fourth subcomponent: 0.5 to 2 moles (note that the number of moles of the fourth subcomponent is a ratio of R1 alone),
the fifth subcomponent: 1.5 to 4.5 moles (note that the number of moles of the fifth subcomponent is a ratio of R2 alone), and
the sixth subcomponent: 0.1 to 0.2 mole;
the total number of moles of the fourth subcomponent and the fifth subcomponent with respect to 100 moles of said main component is 2 to 6 moles when calculated as a conversion of said R1 and a conversion of said R2; and
the ratio of the fifth subcomponent to the total number of moles of the fourth subcomponent and the fifth subcomponent with respect to 100 moles of the main component is in a relationship of 0.5 ≤ R2/(R1 + R2) ≤ 0.75 when calculated as a conversion of said R1 and a conversion of said R2.

2. An electronic device including a dielectric layer composed of the dielectric ceramic composition as set forth in claim 1, wherein a thickness of one of said dielectric layers is 4µm or thicker and 7µm or thinner.

3. The electronic device as set forth in claim 2, being used under a condition where electric field strength of 14 V/µm is imposed per one dielectric layer by applying a direct-current voltage.

4. A production method of the dielectric ceramic composition as set forth in claim 1, comprising the steps of:
obtaining a dielectric ceramic composition powder by mixing a material of said main component and materials of said first to sixth subcomponents; and
obtaining a dielectric ceramic composition by firing said dielectric ceramic composition powder:
wherein
a material having an average particle diameter of 0.1 to 0.3µm is used as the material of said main component; and
firing is performed, so that an average particle diameter of dielectric particles included in said dielectric ceramic composition after firing becomes 1.5 times to 2.0 times as large as an average particle diameter of the material of said main component.
